# EUROPEAN PATENT APPLICATION

(11) **EP 4 510 003 A1**
(43) Date of publication of application: **19.02.2025**
(21) Application number: 24192821.7
(22) Date of filing: 05.08.2024
(51) Int. Cl.: G06F 16/22

(54) **ACCELERATOR AND METHOD FOR DATABASE ACCELERATION**

(30) Priority: 14.08.2023 US 202363532672 P; 17.11.2023 US 202318513501
(71) Applicant: Samsung Electronics Co., Ltd, Suwon-si, Gyeonggi-do 16677 (KR)
(72) Inventor: WASEF, Michael, San Jose, CA, 95134 (US); CHANG, Andrew Zhenwen, San Jose, CA, 95134 (US)
(74) Representative: Kuhnen & Wacker Patent- und Rechtsanwaltsbüro PartG mbB

(57) **Abstract**

An accelerator is disclosed. The accelerator may include a connection to a first storage, which may store a database. The database may include four columns. The accelerator may also include a second storage to store information about the columns of the database. The accelerator may also include a circuit to process the information about the columns and a query to generate a skip information.

## Description

### FIELD

The disclosure relates generally to databases, and more particularly to accelerating queries in a sparse database, and to an accelerator.

### BACKGROUND

Databases continue to grow in size. As more and more data is added to the database, searching the database to process a query may involve processing increasingly large amount of data, which may take more time.

A need remains to improve processing queries in a database.

### SUMMARY

The invention is set out in the appended claims. According to an embodiment an accelerator may process information about columns in a database and a query to generate skip information that may be used in processing the query using the database.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine including an accelerator to generate skip information, according to embodiments of the disclosure.
FIG. 2 shows details of the machine of FIG. 1, according to embodiments of the disclosure.
FIG. 3 shows details of the accelerator of FIG. 1, according to embodiments of the disclosure.
FIG. 4 shows the circuit of FIG. 3 identifying columns that may be skipped when processing the query of FIG. 3, according to embodiments of the disclosure.
FIG. 5 shows how data may be aligned in the database of FIG. 3, according to embodiments of the disclosure.
FIG. 6 shows a flowchart of an example procedure for the accelerator of FIG. 1 to generate the skip information of FIG. 3, according to embodiments of the disclosure.
FIG. 7 shows a flowchart of an example procedure for the accelerator of FIG. 1 to generate and store the skip information of FIG. 3, according to embodiments of the disclosure.
FIG. 8 shows a flowchart of an example procedure for the skip circuit of FIG. 3 to build the skip information of FIG. 3, according to embodiments of the disclosure.
FIG. 9 shows a flowchart of an example procedure for the column filter of FIG. 3 to use the skip information of FIG. 3 in processing the query of FIG. 3 using the database of FIG. 3, according to embodiments of the disclosure.
FIG. 10 shows a flowchart of an example procedure for the column filter of FIG. 3 to load the skip information of FIG. 3, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Users (or applications) may submit queries to databases. These queries may be used to identify data of interest to the user (or application), so that the requested data may be returned.

But databases continue to grow, both in terms of the number of entries in the database and the amount of information stored in each entry. A query might not be interested in all of the data in the entry in the database. For example consider a state database storing information about all registered drivers. Such a database might store each driver's first and last names, their street address, their city, their zip code, their height, their weight, their hair color, and their driver's license number. Searching the database to find the city of residence of a particular person may involve examining the driver's first and last name and their city, but not their street address, zip code, height, weight, hair color, or driver's license number. But all of this information may need to be parsed to find their city of residence.

Embodiments of the disclosure may improve query processing by providing information about how to skip information not relevant to the query. Columns that are not of interest may marked to be skipped. In particular columns of fixed width that are not relevant to the query may be marked to be skipped as a group, expediting the location of columns that are of interest in a particular query. To skip a group of columns, a skip information may be used to indicate the first column to be skipped, the number of columns to be skipped, and the collective width of the group of columns to be skipped.

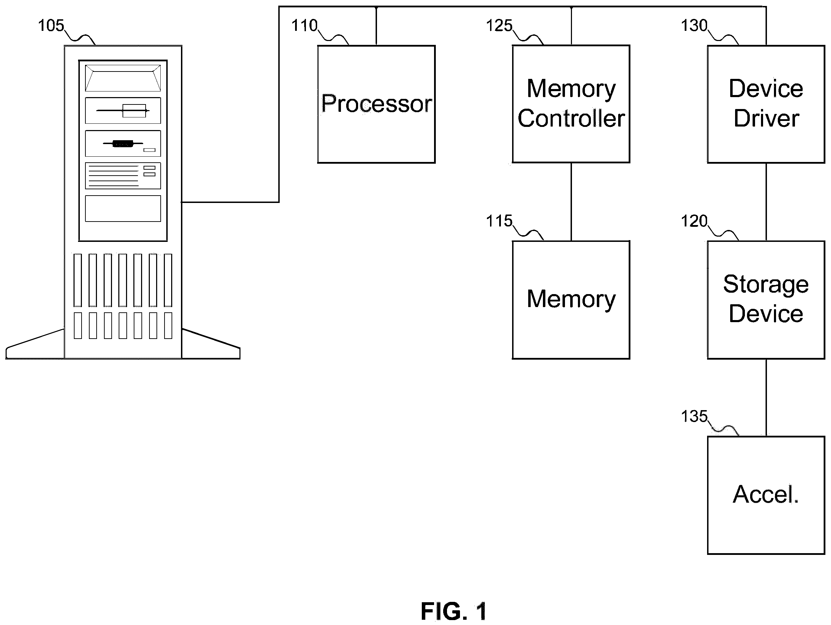

FIG. 1 shows a machine including an accelerator to generate skip information, according to embodiments of the disclosure. In FIG. 1, machine 105, which may also be termed a host or a system, may include processor 110, memory 115, and storage device 120. Processor 110 may be any variety of processor. Processor 110 may also be called a host processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), flash memory, etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115.

Storage device 120 may be used to store data that may be termed "long-term": that is, data that is expected to be stored for longer periods of time, or that does not need to be stored in memory 115. Storage device 120 may be accessed using device driver 130. While FIG. 1 shows one storage device 120, there may be any number (one or more) of storage devices in machine 105.

Embodiments of the disclosure may include any desired mechanism to communicate with storage device 120. For example, storage device 120 may connect to one or more busses, such as a Peripheral Component Interconnect Express (PCIe) bus, or storage device 120 may include Ethernet interfaces or some other network interface. Other potential interfaces and/or protocols to storage device 120 may include Non-Volatile Memory Express (NVMe), NVMe over Fabrics (NVMe-oF), Remote Direct Memory Access (RDMA), Transmission Control Protocol/Internet Protocol (TCP/IP), Universal Flash Storage (UFS), embedded MultiMediaCard (eMMC), InfiniBand, Serial Attached Small Computer System Interface (SCSI) (SAS), Internet SCSI (iSCSI), Serial AT Attachment (SATA), and cache-coherent interconnect protocols, such as the Compute Express Link (CXL) protocols, among other possibilities.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure.

Machine 105 may also include accelerator 135, which may support executing commands in a location other than processor 110. In this manner, accelerator 135 may help to reduce the load on processor 110. In some embodiments of the disclosure, accelerator 135 may process queries submitted to a database stored on storage device 120 of machine 105. Accelerator 135 may be positioned closer to storage device 120, to support near-data processing. Performing near-data processing may reduce the time required to execute a command (performing the command on the data on storage device 120 may be faster than transferring the data from storage device 120 to memory 115, having processor 110 execute the command on the data in memory 115, and then transfer the data back from memory 115 to storage device 120).

In some embodiments of the disclosure, accelerator 135 may be implemented as a circuit. Examples of such circuitry may include a Field Programmable Gate Array (FPGA), Application-Specific Integrated Circuit (ASIC), System-on-a-Chip (SoC), Central Processing Unit (CPU), a Graphics Processing Unit (GPU), a General Purpose GPU (GPGPU), a Neural Processing Unit (NPU), or a Tensor Procesing Unit (TPU), among other possibilities.

While FIG. 1 shows storage device 120 and accelerator 135 as separate components, embodiments of the disclosure may combine these components into a single integrated unit. For example, storage device 120 might include accelerator 135 as circuitry, such as an FPGA, implemented within storage device 120 (for example, perhaps as part of a controller of storage device 120).

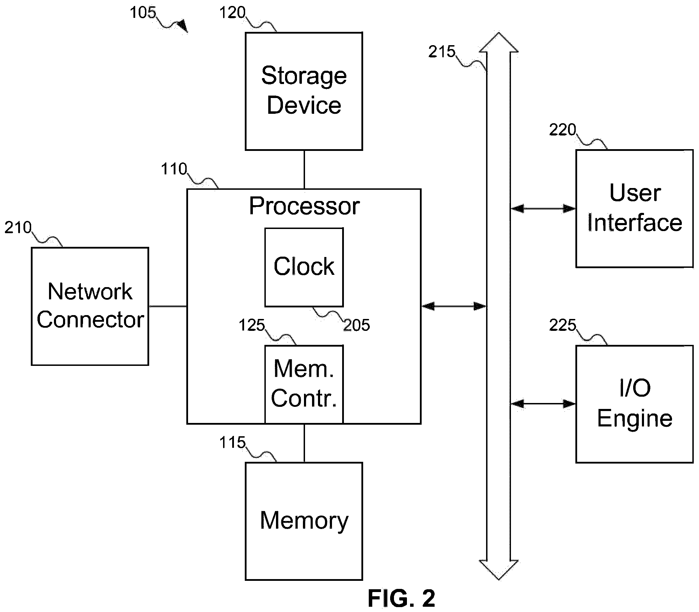

FIG. 2 shows details of the machine of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 125, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

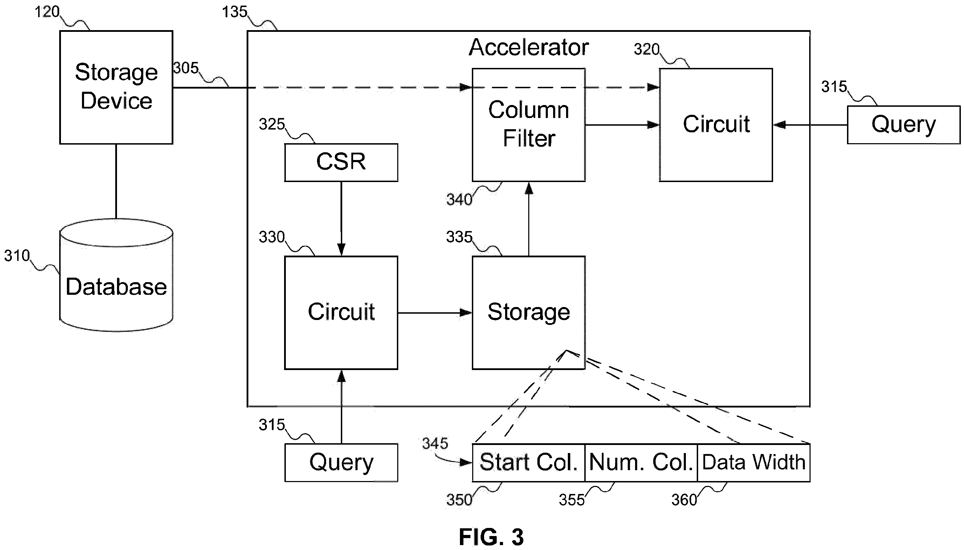

FIG. 3 shows details of accelerator 135 of FIG. 1, according to embodiments of the disclosure. In FIG. 3, accelerator 135 is shown as connected to storage device 120 via connection 305, which may store database 310. Database 310 may include data organized into tables. Queries, such as query 315, may be submitted to database 315 and processed by circuit 320, with the results of query 315 being returned to the entity that submitted query 315 (be it a user or an application running on machine 105 of FIG. 1).

Query 315 may be query to request particular data from particular entries in database 310. For example, consider a state database containing information about persons registered to operate motor vehicles in the state. The database might contain information such as the driver's first name, the driver's last name, the driver's street address, the driver's city of residence, the driver's zip code, the driver's license identification number, the driver's weight, the driver's height, the driver's eye color, the driver's hair color, etc. All of this information may be relevant, but not necessarily to any particular person at any moment in time.

Continuing the earlier example, consider a user interested in identifying all drivers that live in a particular zip code. The user might submit a query to such a database, asking for the first and last names that are stored in the database and are associated with a particular zip code. This user might not care about the drivers' street addresses, height, weight, eye color, hair color, etc.

The column (or columns) in the query that identify which entries in the database of interest-in this example, the city of residence-may be termed the select column(s), as it selects/they select the entries in the database. The column (or columns) in the query that include the data sought by the user-in this example, the first and last names of the people living in that city-may be termed the pick column(s), as it picks/they pick the data sought by the user. All other columns in the database are irrelevant to the query: it might be as though those columns were not even in the database. Queries that use relatively few columns of the database as either select or pick columns may be termed "sparse queries".

In some embodiments of the disclosure, database 310 may be structured in such a way that processing query 315 on database 310 might involve considering each column in database 310, even if some of those columns are of no relevance to query 315. But looking at each column may take some processing cycles. Even if looking at a column takes just two processing cycles, multiply that two processing cycles by the number of columns in database 310, and then by the number of entries of interest in database 310, and the number of processing cycles spent processing columns that are not of interest may add up to a significant amount of time. For example, if database 310 includes 1,000,000 entries and 16 columns of data, even if query 315 only identifies 100,000 entries of interest, processing the query may take 3,200,000 processing cycles. Even with computers that may process four cycles per nanosecond (ns), 3,200,000 processing cycles equates to approximately one millisecond (ms): in computer terms, a not insignificant amount of time. Note that this example database 310 is merely used for illustrative purposes: database 310 may include any number of entries and any number of columns, without limitation.

Accelerator 135 may improve processing efficiency by identifying columns that are not relevant to query 315 and that may be skipped when processing query 315. By skipping columns in groups, processing of query 315 may be performed more efficiently.

Accelerator 135 may include various components, such as Control and Status Register (CSR) 325, circuit 330, storage 335, and column filter 340. To distinguish circuit 330 from circuit 320, circuit 330 may be referred to as skip circuit 330, and circuit 320 may be referred to as query processing circuit 320. Skip circuit 330 and query processing circuit 320 may perform different functions: skip circuit 330 may identify which columns in database 310 may be skipped, whereas query processing circuit 320 may process query 315 using database 310, to return results to the entity that submitted query 315.

CSR 325 may be a register (or other storage, such as a variety of a Read Only Module (ROM), such as a Programmable ROM (PROM), Erasable PROM (EPROM), Electrically Erasable PROM (EEPROM), and others. CSR 325 may also be a variety of RAM as discussed above with reference to memory 115 of FIG. 1, or a form of non-volatile storage such as a hard disk drive or SSD. In addition, CSR 325 may be external to accelerator 135: for example, CSR 325 might be part of storage device 120.

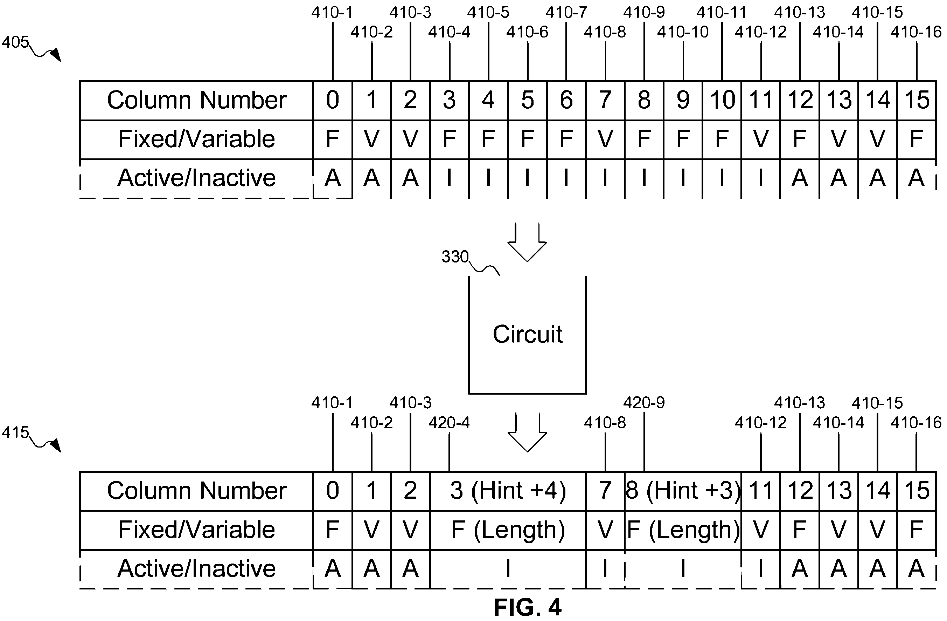

CSR 325 may store information about the structure of database 310. For example, looking ahead to FIG. 4, CSR 325 of FIG. 3 may store information such as is shown in table 405, which may provide information about the structure of database 310 of FIG. 3: that is, the number of columns and whether each column stores fixed width or variable width data. (The information about which columns are active or inactive may depend on query 315 of FIG. 3 rather than being about database 310 of FIG. 3 itself, which is why the active/inactive information in table 405 is shown with dashed lines.) In FIG. 4, table 405 is shown as including information about 16 columns, identified as columns 410-1 through 410-16 (and which may be referred to collectively as columns 410). Columns 410-2, 410-3, 410-8, 410-12, 410-14, and 410-15 are shown as storing variable width data; the remaining columns are shown as storing fixed width data. Fixed width data may be data that has a constant (fixed) width regardless of the entry in database 310 of FIG. 3, whereas variable width data may be data whose width may differ between or among entries in database 310 of FIG. 3. Where columns 410 are of variable width, header information in column 410 for the entry may indicate how wide the data is in that column 410 for that entry.

As an example of fixed vs. variable width data, consider again the state database containing information about persons registered to operate motor vehicles. Even taking into account the most extreme cases of height and weight, a person's height may be no greater than 96 inches, and a person's weight may be no greater than 1000 pounds. Because a person's height or weight might include fractions of an inch or fractions of a pound, these numbers might be stored as floating point numbers. A floating point number might take two or four bytes of space to store, but any height or weight might be stored using a floating point number, meaning that the height and weight columns in database 310 of FIG. 3 might be fixed width columns. Similarly, storing a person's age might be represented using one or two bytes: no one (outside of biblical contexts) is known to have lived for more than approximately 120 years. So a person's age may also be represented using fixed width data.

On the other hand, if the state database stores a person's citizenship (that is, the country that counts that person as a citizen), country names vary in width from short (such as "Chad") to long (such as "The United Kingdom of Great Britain and Northern Ireland"), and variations in between. While such data could be stored in a fixed width column by ensuring the column width is large enough for all possible values, such an arrangement is wasteful, as it is likely that relatively few entries will use the full column width. Thus, it may be more efficient to store such information in a variable width column, so that enough space is provided for whatever data is stored in that column without being wasteful.

Returning to FIG. 3, skip circuit 330 may take the information, such as table 405 of FIG. 4, from CSR 325, as well as query 315, and use them to generate skip information. (Query 315 is shown in two places in FIG. 3 only to illustrate that it is used in different ways by different elements, and not to suggest that accelerator 135 receives query 315 in two different ways from two different sources.) This skip information 345, such as skip information 345, may provide hints that column filter 340 may use when circuit 320 processes query 315. This skip information 345 may include information such as start column 350 (the first column to be skipped in the group), number of columns 355 (the number of columns to be skipped in the group), and data width 360 (the total width of the data in database 310 to be skipped).

Skip information 345 may be stored in storage 335. Storage 335 may be a volatile or non-volatile memory, such as a variety of RAM like memory 115 of FIG. 1, a register, or storage such as an SSD or hard disk drive. Like CSR 325, storage 335 may be external to accelerator 135: for example, storage 335 may be part of storage device 120. By storing skip information 345 in storage 335, column filter 340 may access skip information 345 whenever it is ready to do so, and may use skip information 345 to skip columns from database 310 that are not relevant to query 315.

As an example of how skip information 345 may be generated, return to FIG. 4. In FIG. 4, table 405 includes the active/inactive information. This active/inactive information identifies which columns are relevant to query 315 of FIG. 3 and which are not. In FIG. 4, active columns, such as columns 410-1, 410-2, 410-3, 410-13, 410-14, 410-15, and 410-16, may be relevant to query 315 of FIG. 3: for example, these columns may be select or pick columns in query 315 of FIG. 3. The remaining columns 410 are inactive: they are not relevant to query 315 of FIG. 3. Column filter 340 may therefore skip those columns in providing information to query processing circuit 320.

FIG. 4 also shows how skip circuit 330 may be used to process the information in table 405 to produce a modified table 415. Skip circuit 330 may identify which columns 410 are active and which are inactive (as shown attached to table 405). Which columns 410 are active or inactive may be determined by comparing columns 410 with columns referenced in query 315 of FIG. 3: columns that are referenced in query 315 of FIG. 3 may be active columns, and all remaining columns may be inactive columns. Query processing circuit 320 of FIG. 3 may use modified table 415, to be able to match data received from database 310 of FIG. 3 (as filtered by column filter 340 of FIG. 3) with the appropriate columns in modified table 415.

Once skip circuit 330 has identified which columns are inactive, skip circuit 330 may identify groups of inactive columns of fixed width. For example, columns 410-4, 410-5, 410-6, and 410-7 form one such group, as do columns 410-9, 410-10, and 410-11. Note that while columns 410-8 and 410-12 are marked as inactive, these columns store variable width data, which means that the amount of data to be skipped may be determined by examining the data itself: the data width may vary from entry to entry.

Once skip circuit 330 has identified such groups of inactive fixed width columns, circuit 330 may generate skip information 345 of FIG. 3. Skip information 420-4 and 420-9 are examples of such skip information. For example, skip information 420-4 indicates that column three is the first column to be skipped, and that a total of four columns are to be skipped (indicated as Hint +4). The data width for this group of skipped columns may be shown as F (Length): F may indicate that the group of columns store fixed width data, and Length may indicate the total storage used by the columns in the group. Similarly, skip information 420-9 indicates that column 8 is the start of a group of columns to skip, with a total of three columns to skip with the indicated total data width.

Note that skip information, such as skip information 420-4 and 420-9, may be stored as separate information (such as skip information 345 of FIG. 3), or skip information 420-4 and 420-9 may be integrated into modified table 415. Embodiments of the disclosure may use either approach, as well as other alternative approaches for managing skip information 345 of FIG. 3 and skip information 420-4 and 420-9. Thus, while FIG. 3 shows only one skip information 345 of FIG. 3, embodiments of the disclosure may include any number of skip information 345 of FIG. 3.

A few points about FIG. 4 are worth mentioning. First, while FIG. 4 might suggest that each fixed width column uses the same data width, embodiments of the disclosure may support different data widths for different fixed width columns. That is, as long as the column has a consistent width, there is no requirement that all fixed width columns in database 310 of FIG. 3 have the same data width. For example, table 405 might be augmented to indicate the actual width of each fixed width column: perhaps by indicating that width as part of whether the column is of fixed width or variable width. For example, if a column is of fixed width, the width of the column (in bits, bytes, or any other desired unit) may be specified numerically in the fixed/variable field. If a column is of variable width, a flag, such as "V" (as shown) may be used to indicate that the column is of variable width.

Second, while all the inactive fixed width columns in table 405 are part of groups that may be skipped together, in some embodiments of the disclosure there might be a single inactive fixed width column that is not part of a group (because its adjacent columns are active, variable width, or both). For example, what if column 410-16 was also identified as inactive for query 315 of FIG. 3? While skip information 345 of FIG. 3 might be generated for a single inactive fixed width column, the benefits of doing so might not be significant. For example, if it takes two processing cycles to process either a single column or group of columns to be skipped, there might not be much improvement in efficiency by generating skip information 345 of FIG. 3 for an individual column. (Note, however, that this analysis does not consider the efficiency of query processing circuit 320 of FIG. 3: if column filter 340 of FIG. 3 may filter data that is not needed for query 315 of FIG. 3, then query processing circuit 320 of FIG. 3 might have less data to process, and so there might still be some efficiency gained by filtering such columns. But the number of processing cycles needed for column filter 320 of FIG. 3 to process a single fixed width column skip information 345 of FIG. 3 might be the same as to process a single fixed width column without skip information 345 of FIG. 3.)

Returning again to FIG. 3, column filter 340 may use skip information 345 as produced by skip circuit 330. Since skip information 345 may be produced based in part on query 315, column filter 340 may trust that the data in columns identified in skip information 345 may be skipped without affecting the results of query 315. Thus, as column filter 340 receives data from database 310 (via storage device 120 and connection 305), column filter may remove data that is not relevant to query 315 before passing data to query processing circuit 320, simplifying the processing performed by query processing circuit 320. Continuing the above example of two processing cycles being used per column per entry, column filter 340 may identify and filter columns based on skip information 345 in two processing cycles. When compared with the six or eight processing cycles that might be used to process the three columns in skip information 420-9 of FIG. 4 or the four columns in skip information 420-4 of FIG. 4, column filter 340 may save 10 processing cycles (two cycles to process each of skip information 420-4 and 420-9 of FIG. 4 as compared with 14 processing cycles to process all seven columns). Thus, column filter 340 might save 10 processing cycles out of 32 processing cycles: a roughly 31% improvement.

In some embodiments of the disclosure, skip circuit 330 may process query 315 in parallel with data being delivered from database 310 to column filter 340. That is, column filter 340 may being filtering data as received from database 310 even while skip circuit 330 may be processing query 315 to generate skip information 345. While it might seem more efficient for column filter 340 to wait until skip information 345 has been generated before filtering data from database 310, it may actually be more efficient for column filter 340 to start its operations without first receiving skip information 345. In this manner, query processing circuit 320 may start its processing of the relevant data from database 310 more quickly. Then, when skip information 345 is available to column filter 340, column filter 340 may use skip information to identify columns in database 310 to be skipped more rapidly.

The discussion above with reference to FIGs. 3-4 described how wide various columns 410 of FIG. 4 might be. But column width might not be the only factor in determining how much data should be skipped based on skip information 345 of FIG. 3.

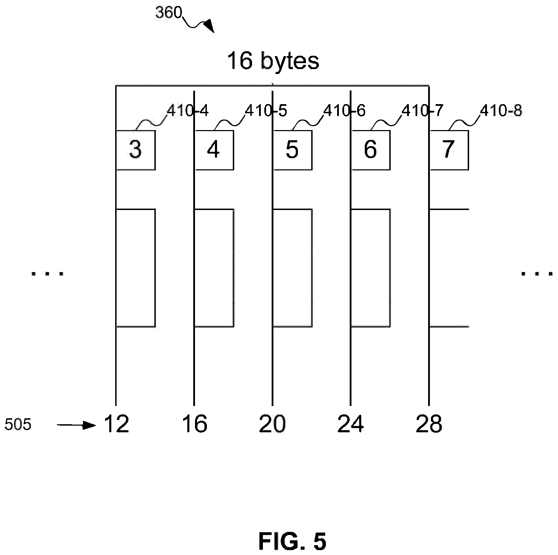

FIG. 5 shows how data may be aligned in database 310 of FIG. 3, according to embodiments of the disclosure. In FIG. 5, columns 410-4 through 410-8 are shown. Columns 410-4 through 410-7 may be fixed width columns: in FIG. 5, each of columns 410-4 through 410-7 is shown as being two bytes wide. But database 310 of FIG. 3 might be designed that each column should start at a multiple of four bytes: that is, the data should be aligned on four-byte boundaries. In FIG. 5, this alignment is shown as alignments 505.

Because each column 410-4 through 410-7 is only two bytes wide, some columns 410 may start more than two bytes from the start of the previous column 410. For example, while column 410-4 is shown as starting at byte 12, column 410-4 only stores two bytes of data. Since in the example shown columns 410 are aligned at four-byte boundaries, column 410-5 would start, not at byte 14 (the starting byte of column 410-4 plus the width of column 410-4), but at byte 16 (the nearest four-byte boundary for column 410-4 that permits storing all the data in column 410-4). If, for example, column 410-4 was actually six bytes wide, then column 410-5 would start at byte 20 (the next four-byte boundary that would leave at least six bytes for column 410-4).

Thus, when calculating data width 360, skip circuit 330 of FIG. 3 may factor in not only the width of the data stored in columns 410, but also any additional space used for data alignment. In other words, data width 360 may be equal to the sum of the widths of columns 410-4 though 410-7, plus the additional space used to keep columns 410-5 through 410-8 aligned. As may be seen in the example of FIG. 5, data width 360 is therefore 16 bytes: two bytes each for the widths of columns 410-4 through 410-7, plus two bytes each for alignment of columns 410-5 through 410-8. In other examples, data width 360 may be different, based on the number of columns 410, the widths of columns 410 and the additional space used for data alignment.

Recall that columns 410-2 and 410-3 of FIG. 4 are each variable width columns. Since each entry may specify how much data is actually stored in variable width columns, it may be concluded that columns 410-2 and 410-3 of FIG. 3 each store no more than four bytes of data, or else column 410-4 might start at a different four-byte alignment than byte 12. FIG. 5 merely shows one possible example alignment, and other entries in database 310 of FIG. 3 may have different column alignments.

In the above example, columns 410-4 through 410-7 are each described as being two bytes wide. As noted above, this is merely for example purposes, and each column 410-4 through 410-7 might have different widths, which might be larger than the data alignment widths. In addition, while FIG. 5 shows database 310 of FIG. 3 aligning data along four-byte boundaries, any other alignment boundary may be used, without limitation.

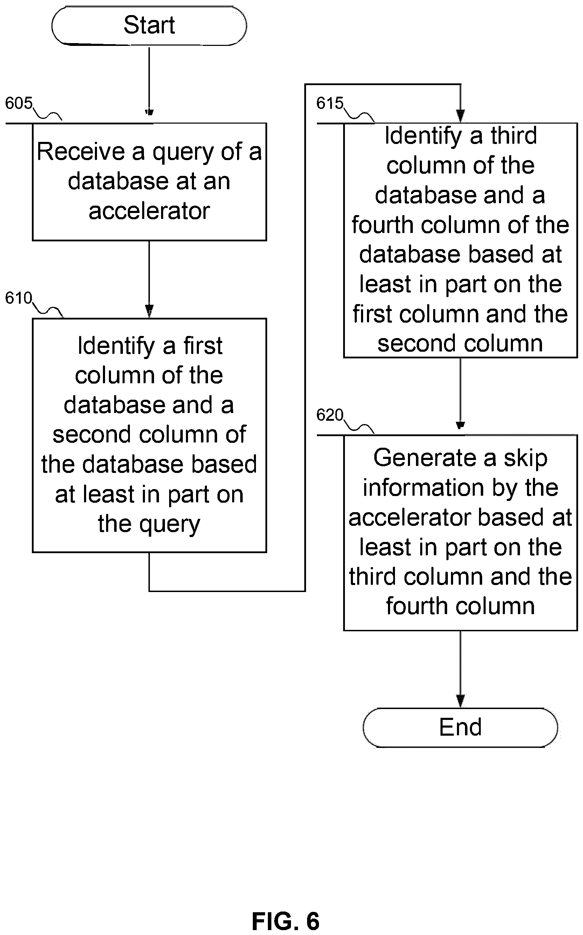

FIG. 6 shows a flowchart of an example procedure for accelerator 135 of FIG. 1 to generate skip information 345 of FIG. 3, according to embodiments of the disclosure. In FIG. 6, at block 605, accelerator 135 of FIG. 3 may receive query 315 of FIG. 3 for use with database 310 of FIG. 3. At block 610, skip circuit 330 of FIG. 3 may identify columns 410 of FIG. 4 in database 310 of FIG. 3 that are used in query 315 of FIG. 3. At block 615, skip circuit 330 of FIG. 3 may identify columns 410 of FIG. 4 in database 310 of FIG. 3 that are not used in query 315 of FIG. 3. Finally, at block 620, skip circuit 330 of FIG. 3 may generate skip information 345 of FIG. 3 based on columns 410 of FIG. 4 in database 310 of FIG. 3 that are not used in query 315 of FIG. 3.

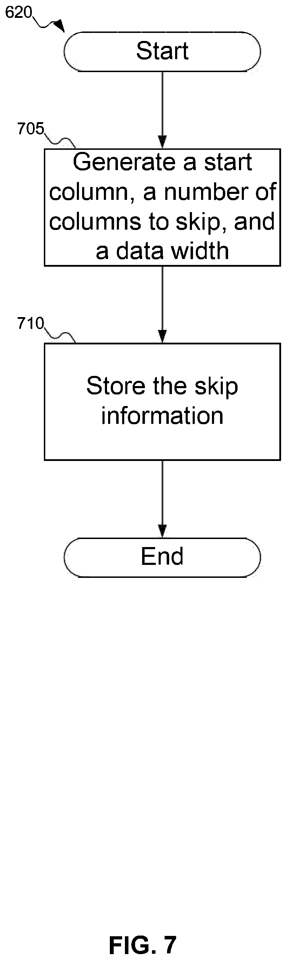

FIG. 7 shows a flowchart of an example procedure for accelerator 135 of FIG. 1 to generate and store skip information 345 of FIG. 3, according to embodiments of the disclosure. In FIG. 7, at block 705, skip circuit 330 of FIG. 3 may generate start column 350 of FIG. 3, number 355 of FIG. 3 of columns to skip, and data width 360 of FIG. 3. At block 710, skip circuit 330 of FIG. 3 may then store skip information 345 of FIG. 3: for example, in storage 335 of FIG. 3, so that column filter 340 of FIG. 3 may retrieve skip information 345 of FIG. 3 from storage 335 of FIG. 3.

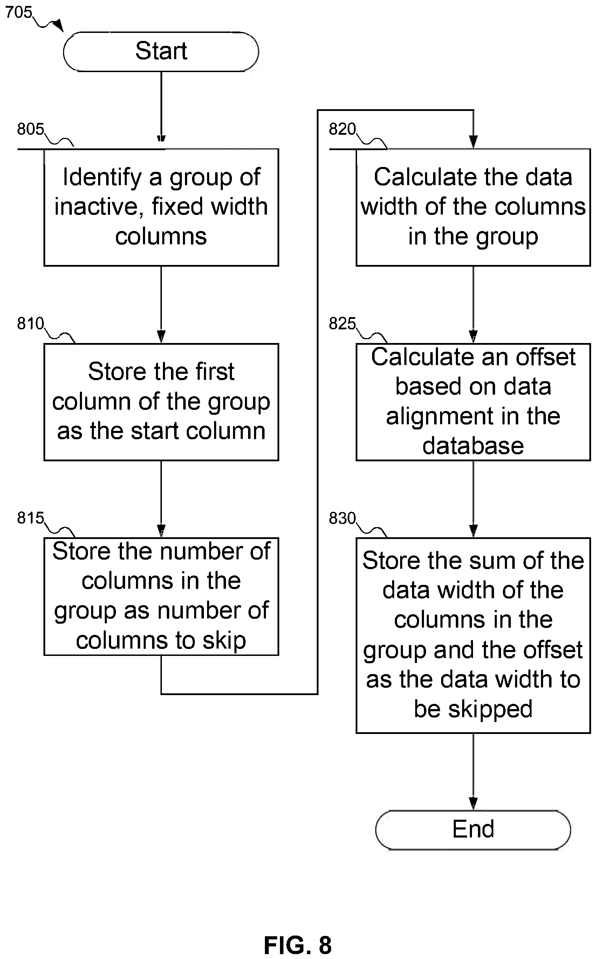

FIG. 8 shows a flowchart of an example procedure for skip circuit 330 of FIG. 3 to build skip information 345 of FIG. 3, according to embodiments of the disclosure. In FIG. 8, at block 805, skip circuit 330 of FIG. 3 may identify a group of inactive, fixed width columns 410 of FIG. 4. At block 810, skip circuit 330 of FIG. 3 may store the first column in the group as start column 350 of FIG. 3. For example, for the group consisting of columns 410-4 through 410-7 of FIG. 4, start column 350 of FIG. 3 may be an identifier of column 410-4 of FIG. 4. At block 815, skip circuit 330 of FIG. 3 may store number 355 of FIG. 3 of columns in the group of columns to skip. For example, for the group consisting of columns 410-4 through 410-7 of FIG. 4, the number 355 of FIG. 3 may be four, as there are four columns 410 of FIG. 4 in the group consisting of columns 410-4 through 410-7 of FIG. 4.

At block 820, skip circuit 330 of FIG. 3 may calculate the data width of columns 410 of FIG. 4 in the group of columns to skip. For example, for the group consisting of columns 410-4 though 410-7 of FIG. 4, there are four columns 410 of FIG. 4, each with a data width of two bytes, for a total of eight bytes. At block 825, skip circuit 330 of FIG. 3 may calculate an offset that represents the additional space used in database 310 of FIG. 3 to ensure that columns are aligned. For example, for the group consisting of columns 410-4 through 410-7 of FIG. 4 and using a four-byte alignment, the offset may be calculated as two bytes for each of columns 410-4 through 410-7 of FIG. 4 (to pad each individual column to a four-byte boundary), for a total of eight bytes. Finally, at block 830, skip circuit 330 of FIG. 3 may store the sum of the data width of the columns 410 of FIG. 4in the group and the offset used in the group as data width 360 of FIG. 3. For example, for the group of columns 410-4 through 410-7 of FIG. 4 and using a four-byte alignment, the total width is 16 bytes (eight bytes plus eight bytes).

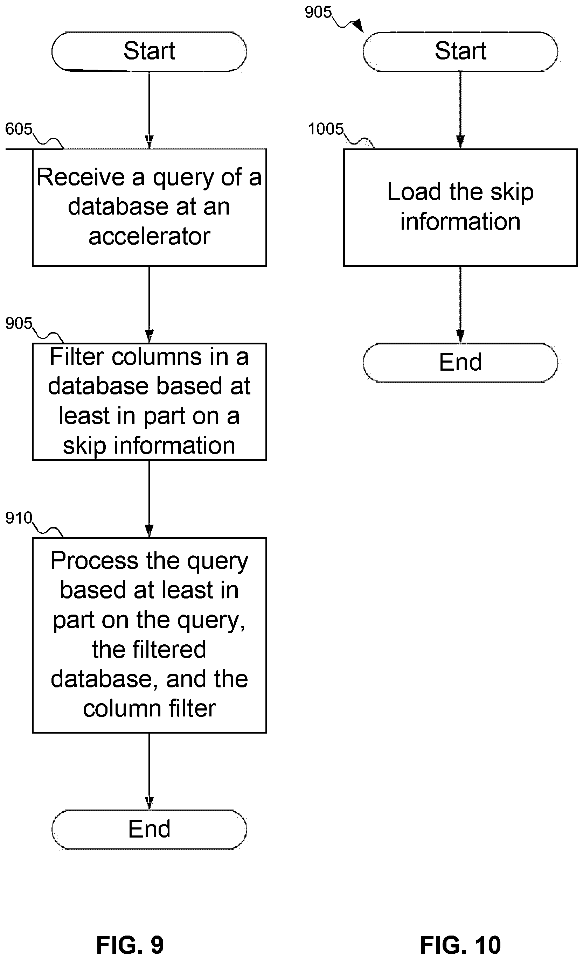

FIG. 9 shows a flowchart of an example procedure for column filter 340 of FIG. 3 to use skip information 345 of FIG. 3 in processing query 315 of FIG. 3 using database 310 of FIG. 3, according to embodiments of the disclosure. In FIG. 9, at block 605, accelerator 135 of FIG. 3 may receive query 315 of FIG. 3 for use with database 310 of FIG. 3. (Note that the same figure reference number 605 is shown in both FIGs. 6 and 9, as the operation of receiving query 315 of FIG. 3 is the same operation, merely leading to different processing depending on the circuit.) At block 905, column filter 340 of FIG. 3 may filter entries in database 310 of FIG. 3 using skip information 345 of FIG. 3. More specifically, as data from database 310 of FIG. 3 is received, column filter 340 may identify what data is for columns 410 of FIG. 4. Data for columns 410 of FIG. 4 that are to be skipped according to skip information 345 of FIG. 3 may be "removed" (that is, not forwarded to query processing circuit 320 of FIG. 3).

FIG. 10 shows a flowchart of an example procedure for column filter 340 of FIG. 3 to load skip information 345 of FIG. 3, according to embodiments of the disclosure. In FIG. 10, at block 1005, column filter 340 of FIG. 3 may load skip information 345 of FIG. 3 from storage 335 of FIG. 3.

In FIGs. 6-10, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Some embodiments of the disclosure may include an accelerator to generate skip information that may be used by a column filter to skip columns of data in a database in response to a query. By skipping columns using skip information, the time involved to process the query may be reduced, providing a technical advantage over other methods for processing queries process queries.

Processing inactive fixed columns in some database system tables may have a significant impact on the tuple processing time. Inactive columns are not used in the scan or pick path. Therefore, with wider and sparse active columns this problem may worsen and affect the processing time of each tuple and this repeated for all tuples in the input schema.

Embodiments of the disclosure include a preprocessing algorithm using an active columns index list and datatypes of each column to convert each group of consecutive inactive fixed columns into one column with defined length. This preprocessing algorithm may accelerate the performance of such database systems by reducing the time required for processing each tuple in column filter kernel.

In one example, column filtering may process column by column in each tuple (row) starting from column 0 to the highest active column. In some embodiments of the disclosure, column filtering may support up to 128 or more columns. The column filter may be implemented in hardware to use hint messages to filter inactive fixed columns.

Processing a fixed inactive column may waste 2 cycles for each column and in some cases 4 cycles.

Even with a relatively narrow tuple (16 columns only), inactive fixed columns may waste around 16 cycles (in the best case) for processing seven columns. This waste may be repeated for all tuples.

Embodiments of the disclosure may preprocess the list of active and non-active columns and each column datatype, and may convert each set of fixed consecutive inactive columns into a one column with a defined length.

A skipping algorithm may be run after the Control and Status Register (CSR) configuration is done and during fetching of input pages. The skip algorithm may loop around all columns indices in the tuple and detect each set of inactive fixed consecutive columns. For each set of inactive consecutive fixed columns, the algorithm may generate a hint message for the column filter and store it in a shared memory. This message contain the starting index of this group, how many columns may be skipped, and the length of these columns grouped together may depend on the datatype and alignment requirement of each column. During tuple processing, the column filter may use the skip messages to convert each group of inactive fixed consecutive columns into one columns with a predefined length.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, *e.g.*, automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, *e.g.*, RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes an accelerator, comprising:
   a connection to a first storage configured to store a database, the database including a first column, a second column, a third column, and a fourth column;
   a second storage to store a first information about the first column of the database, a second information about the second column of the database, a third information about the third column of the database, and a fourth information about the fourth column of the database; and
   a circuit to process the first information, the second information, the third information, the fourth information and a query to generate a skip information.
Statement 2. An embodiment of the disclosure includes the accelerator according to statement 1, further comprising a second circuit to process the query using the database and the skip information.
Statement 3. An embodiment of the disclosure includes the accelerator according to statement 2, wherein the second circuit includes a column filter to identify columns in the database based at least in part on the skip information.
Statement 4. An embodiment of the disclosure includes the accelerator according to statement 1, further comprising a third storage to store the skip information.
Statement 5. An embodiment of the disclosure includes the accelerator according to statement 1, wherein the second storage is configured to store a fourth information containing a combination of the first information, the second information, the third information, and the fourth information.
Statement 6. An embodiment of the disclosure includes the accelerator according to statement 1, wherein:
   the query includes a first identifier of the first column as a select column of the query and a second identifier of the second column as a pick column of the query; and
   the skip information includes a start column, a number of columns to skip, and a data width.
Statement 7. An embodiment of the disclosure includes the accelerator according to statement 6, wherein:
   the start column includes a third identifier of the third column; and
   the data width is generated based at least in part on a first width of the third column and a second width of the fourth column.
Statement 8. An embodiment of the disclosure includes the accelerator according to statement 7, wherein the data width is generated based at least in part on the first width of the third column, the second width of the fourth column, and a data alignment of the database.
Statement 9. An embodiment of the disclosure includes the accelerator according to statement 1, wherein the circuit is configured to generate skip information based at least in part on the third column and the fourth column being fixed width columns.
Statement 10. An embodiment of the disclosure includes the accelerator according to statement 1, wherein the accelerator includes the first storage.
Statement 10a. An embodiment of the disclosure includes the accelerator according to statement 1, wherein the first information includes a flag indicating whether the first column is of fixed or variable width or a width of the first column.
Statement 10c. An embodiment of the disclosure includes the accelerator according to statement 1, wherein the second storage stores a data alignment of the database.
Statement 11. An embodiment of the disclosure includes an accelerator, comprising:
   a column filter to skip at least one column in a database based at least in part on a skip information; and
   a circuit to process a query based at least in part on the query, the database, and the column filter.
Statement 12. An embodiment of the disclosure includes the accelerator according to statement 11, wherein:
   the skip information includes a start column and a number of columns to skip; and
   the at least one column is identified based at least in part on the start column and the number of columns to skip.
Statement 14. An embodiment of the disclosure includes the accelerator according to statement 12, wherein the skip information is based at least in part on the start column and the number of columns being fixed width columns.
Statement 13. An embodiment of the disclosure includes the accelerator according to statement 11, wherein:
   the skip information includes a start column and a data width; and
   the at least one column is identified based at least in part on the start column and the data width.
Statement 15. An embodiment of the disclosure includes a method, comprising:
   receiving a query of a database at an accelerator;
   identifying a first column of the database and a second column of the database based at least in part on the query;
   identifying a third column of the database and a fourth column of the database based at least in part on the first column and the second column; and
   generating a skip information by the accelerator based at least in part on the third column and the fourth column.
Statement 16. An embodiment of the disclosure includes the method according to statement 15, further comprising processing the query based at least in part on the database and the skip information.
Statement 17. An embodiment of the disclosure includes the method according to statement 16, wherein:
   generating the skip information by the accelerator based at least in part on the third column and the fourth column includes storing the skip information in a storage of the accelerator; and
   processing the query based at least in part on the database and the skip information includes loading the skip information from the storage of the accelerator.
Statement 18. An embodiment of the disclosure includes the method according to statement 15, wherein identifying the first column of the database and the second column of the database based at least in part on the query includes:
   identifying the first column as a select column of the query; and
   identifying the second column as a pick column of the query.
Statement 19. An embodiment of the disclosure includes the method according to statement 15, wherein identifying the third column of the database and the fourth column of the database based at least in part on the first column and the second column includes identifying the third column of the database and the fourth column of the database based at least in part on the query being independent of the third column and the fourth column.
Statement 20. An embodiment of the disclosure includes the method according to statement 15, wherein generating the skip information by the accelerator based at least in part on the third column and the fourth column includes generating the skip information by a circuit of the accelerator based at least in part on the third column and the fourth column.
Statement 21. An embodiment of the disclosure includes the method according to statement 15, wherein generating the skip information by the accelerator based at least in part on the third column and the fourth column includes generating a start column, a number of columns to skip, and a data width based at least in part on the third column and the fourth column.
Statement 22. An embodiment of the disclosure includes the method according to statement 21, wherein generating the start column, the number of columns to skip, and the data width based at least in part on the third column and the fourth column includes:
   identifying the third column as the start column; and
   generating the data width based at least in part on a first width of the third column and a second width of the fourth column.
Statement 23. An embodiment of the disclosure includes the method according to statement 22, wherein generating the data width based at least in part on the first width of the third column and the second width of the fourth column includes generating the data width based at least in part on the first width of the third column, the second width of the fourth column, and a data alignment of the database.
Statement 24. An embodiment of the disclosure includes a method, comprising:
   receiving a query of a database at an accelerator;
   filtering columns in a database using a column filter based at least in part on a skip information; and
   processing the query based at least in part on the query, the database, and the column filter.
Statement 25. An embodiment of the disclosure includes the method according to statement 24, wherein filtering the columns in the database using the column filter based at least in part on the skip information includes loading the skip information from a storage.
Statement 26. An embodiment of the disclosure includes the method according to statement 25, wherein loading the skip information from the storage includes loading the skip information from a storage of the accelerator.
Statement 27. An embodiment of the disclosure includes the method according to statement 24, wherein:
   the skip information includes a start column and a number of columns to skip; and
   filtering the columns in the database using the column filter based at least in part on the skip information includes filtering the columns in the database using the column filter based at least in part on the start column and the number of columns.
Statement 29. An embodiment of the disclosure includes the method according to statement 27, wherein the skip information is based at least in part on the start column and the number of columns being fixed width columns.
Statement 28. An embodiment of the disclosure includes the method according to statement 24, wherein:
   the skip information includes a start column and a data width; and
   filtering the columns in the database using the column filter based at least in part on the skip information includes filtering the columns in the database using the column filter based at least in part on the start column and the data width.
Statement 30. An embodiment of the disclosure includes an article, comprising a non-transitory storage medium, the non-transitory storage medium having stored thereon instructions that, when executed by a machine, result in:
   receiving a query of a database at an accelerator;
   identifying a first column of the database and a second column of the database based at least in part on the query;
   identifying a third column of the database and a fourth column of the database based at least in part on the first column and the second column; and
   generating a skip information by the accelerator based at least in part on the third column and the fourth column.
Statement 31. An embodiment of the disclosure includes the article according to statement 30, the non-transitory storage medium having stored thereon further instructions that, when executed by the machine, result in processing the query based at least in part on the database and the skip information.
Statement 32. An embodiment of the disclosure includes the article according to statement 31, wherein:
   generating the skip information by the accelerator based at least in part on the third column and the fourth column includes storing the skip information in a storage of the accelerator; and
   processing the query based at least in part on the database and the skip information includes loading the skip information from the storage of the accelerator.
Statement 33. An embodiment of the disclosure includes the article according to statement 30, wherein identifying the first column of the database and the second column of the database based at least in part on the query includes:
   identifying the first column as a select column of the query; and
   identifying the second column as a pick column of the query.
Statement 34. An embodiment of the disclosure includes the article according to statement 30, wherein identifying the third column of the database and the fourth column of the database based at least in part on the first column and the second column includes identifying the third column of the database and the fourth column of the database based at least in part on the query being independent of the third column and the fourth column.
Statement 35. An embodiment of the disclosure includes the article according to statement 30, wherein generating the skip information by the accelerator based at least in part on the third column and the fourth column includes generating the skip information by a circuit of the accelerator based at least in part on the third column and the fourth column.
Statement 36. An embodiment of the disclosure includes the article according to statement 30, wherein generating the skip information by the accelerator based at least in part on the third column and the fourth column includes generating a start column, a number of columns to skip, and a data width based at least in part on the third column and the fourth column.
Statement 37. An embodiment of the disclosure includes the article according to statement 36, wherein generating the start column, the number of columns to skip, and the data width based at least in part on the third column and the fourth column includes:
   identifying the third column as the start column; and
   generating the data width based at least in part on a first width of the third column and a second width of the fourth column.
Statement 38. An embodiment of the disclosure includes the article according to statement 37, wherein generating the data width based at least in part on the first width of the third column and the second width of the fourth column includes generating the data width based at least in part on the first width of the third column, the second width of the fourth column, and a data alignment of the database.
Statement 39. An embodiment of the disclosure includes an article, comprising a non-transitory storage medium, the non-transitory storage medium having stored thereon instructions that, when executed by a machine, result in:
   receiving a query of a database at an accelerator;
   filtering columns in a database using a column filter based at least in part on a skip information; and
   processing the query based at least in part on the query, the database, and the column filter.
Statement 40. An embodiment of the disclosure includes the article according to statement 39, wherein filtering the columns in the database using the column filter based at least in part on the skip information includes loading the skip information from a storage.
Statement 41. An embodiment of the disclosure includes the article according to statement 40, wherein loading the skip information from the storage includes loading the skip information from a storage of the accelerator.
Statement 42. An embodiment of the disclosure includes the article according to statement 39, wherein:
   the skip information includes a start column and a number of columns to skip; and
   filtering the columns in the database using the column filter based at least in part on the skip information includes filtering the columns in the database using the column filter based at least in part on the start column and the number of columns.
Statement 43. An embodiment of the disclosure includes the article according to statement 42, wherein the skip information is based at least in part on the start column and the number of columns being fixed width columns.
Statement 44. An embodiment of the disclosure includes the article according to statement 39, wherein:
   the skip information includes a start column and a data width; and
   filtering the columns in the database using the column filter based at least in part on the skip information includes filtering the columns in the database using the column filter based at least in part on the start column and the data width.

## Claims

1. An accelerator, comprising:
a connection to a first storage to store a database, the database including a first column, a second column, a third column, and a fourth column;
a second storage to store a first information about the first column of the database, a second information about the second column of the database, a third information about the third column of the database, and a fourth information about the fourth column of the database; and
a circuit to process the first information, the second information, the third information, the fourth information, and a query to generate a skip information.

2. The accelerator according to claim 1, further comprising a second circuit to process the query using the database and the skip information.

3. The accelerator according to claim 2, wherein the second circuit includes a column filter to identify columns in the database based at least in part on the skip information.

4. The accelerator according to any one of claims 1 to 3, wherein:
the query includes a first identifier of the first column as a select column of the query and a second identifier of the second column as a pick column of the query; and
the skip information includes a start column, a number of columns to skip, and a data width.

5. The accelerator according to claim 4, wherein:
the start column includes a third identifier of the third column; and
the data width is generated based at least in part on a first width of the third column and a second width of the fourth column.

6. The accelerator according to claim 5, wherein the data width is generated based at least in part on the first width of the third column, the second width of the fourth column, and a data alignment of the database.

7. The accelerator according to any one of claims 1 to 6, wherein the circuit is configured to generate the skip information based at least in part on the third column and the fourth column being fixed width columns.

8. The accelerator according to any one of claims 1 to 7, wherein the first information includes a flag indicating whether the first column is of fixed or variable width or a width of the first column.

9. A method, comprising:
receiving a query of a database at an accelerator;
identifying a first column of the database and a second column of the database based at least in part on the query;
identifying a third column of the database and a fourth column of the database based at least in part on the first column and the second column; and
generating a skip information by the accelerator based at least in part on the third column and the fourth column.

10. The method according to claim 9, further comprising processing the query based at least in part on the database and the skip information.

11. The method according to claim 9 or 10, wherein identifying the first column of the database and the second column of the database based at least in part on the query includes:
identifying the first column as a select column of the query; and
identifying the second column as a pick column of the query.

12. The method according to any one of claims 9 to 11, wherein generating the skip information by the accelerator based at least in part on the third column and the fourth column includes generating the skip information by a circuit of the accelerator based at least in part on the third column and the fourth column.

13. The method according to any one of claims 9 to 12, wherein generating the skip information by the accelerator based at least in part on the third column and the fourth column includes generating a start column, a number of columns to skip, and a data width based at least in part on the third column and the fourth column.

14. The method according to claim 13, wherein generating the start column, the number of columns to skip, and the data width based at least in part on the third column and the fourth column includes:
identifying the third column as the start column; and
generating the data width based at least in part on a first width of the third column and a second width of the fourth column.

15. The method according to claim 14, wherein generating the data width based at least in part on the first width of the third column and the second width of the fourth column includes generating the data width based at least in part on the first width of the third column, the second width of the fourth column, and a data alignment of the database.
